(19) Europäisches Patentamt
European Patent Office
Office européen des brevets

(11) EP 1 389 221 B1

(12) **EUROPÄISCHE PATENTSCHRIFT**

(45) Veröffentlichungstag und Bekanntmachung des Hinweises auf die Patenterteilung:
**22.07.2009 Patentblatt 2009/30**

(21) Anmeldenummer: **02724309.6**

(22) Anmeldetag: **07.05.2002**

(51) Int Cl.:
***C08G 18/02*** *(2006.01)* ***C08G 18/09*** *(2006.01)*
***C08G 18/20*** *(2006.01)*

(86) Internationale Anmeldenummer:
**PCT/EP2002/005000**

(87) Internationale Veröffentlichungsnummer:
**WO 2002/092656 (21.11.2002 Gazette 2002/47)**

(54) **VERFAHREN ZUR HERSTELLUNG VON ALIPHATISCHEN POLYISOCYANATEN MIT URETDION-, ISOCYANURAT- SOWIE IMINOOXADIAZINDIONSTRUKTUR**

METHOD FOR PRODUCING ALIPHATIC POLYISOCYANATES HAVING AN URETDIONE, ISOCYANURATE AND IMINOOXADIAZINDIONE STRUCTURE

PROCEDE DE PRODUCTION DE POLYISOCYANATES ALIPHATIQUES PRESENTANT UNE STRUCTURE URETDIONE, ISOCYANURATE OU IMINOOXADIAZINDIONE

(84) Benannte Vertragsstaaten:
**AT BE CH CY DE DK ES FI FR GB GR IE IT LI LU MC NL PT SE TR**

(30) Priorität: **14.05.2001 DE 10123419**

(43) Veröffentlichungstag der Anmeldung:
**18.02.2004 Patentblatt 2004/08**

(73) Patentinhaber: **Bayer MaterialScience AG**
**51368 Leverkusen (DE)**

(72) Erfinder:
- **RICHTER, Frank**
  **51373 Leverkusen (DE)**
- **HALPAAP, Reinhard**
  **51519 Odenthal (DE)**
- **KÖCHER, Jürgen**
  **40764 Langenfeld (DE)**
- **LAAS, Hans-Josef**
  **51467 Bergisch Gladbach (DE)**

(56) Entgegenhaltungen:
**EP-A- 0 896 009**
**WO-A-99/23128**
**US-A- 3 252 945**

- **LAAS H J ET AL: "ZUR SYNTHESE ALIPHATISCHER POLYISOCYANATE- LACKPOLYISOCYANATE MIT BIURET-, ISOCYANURAT- ODER URETDIONSTRUKTUR THE SYNTHESIS OF ALIPHATIC POLYISOCYANATES CONTAINING BIURET, ISOCYANURATE OR URETDIONE BACKBONES FOR USE IN COATINGS" JOURNAL FUR PRAKTISCHE CHEMIE, CHEMIKER ZEITUNG, WILEY VCH, WEINHEIM, DE, Bd. 336, Nr. 3, 1994, Seiten 185-200, XP000441642 ISSN: 1436-9966**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein neues Verfahren zur Herstellung von aliphatischen Polyisocyanaten mit Uretdion-, Isocyanurat- sowie Iminooxadiazindionstrukturen, die so hergestellten Isocyanate sowie ihre Verwendung zur Herstellung von Polyurethanlacken und -beschichtungen.

## Hintergrund

Die Oligomerisierung von Isocyanaten ist eine lange bekannte, in der Praxis gut eingeführte Methode zur Modifizierung in der Regel difunktioneller niedermolekularer Isocyanate, um zu Produkten mit vorteilhaften Anwendungseigenschaften, z.B. auf dem Lack- und Beschichtungsmittelsektor, in der vorliegenden Schrift allg. Polyisocyanate genannt, zu gelangen *(*J. Prakt. Chem./Chem. Ztg. 1994, 336, 185-200.).

Für lichtbeständige, nicht vergilbende Lacke und Beschichtungen werden in der Regel Polyisocyanate auf Basis aliphatischer Diisocyanate eingesetzt. Der Term "aliphatisch" bezieht sich dabei auf die Kohlenstoffatome, an die die NCO-Gruppen des Monomers gebunden sind, d.h. im Molekülverband können durchaus aromatische Ringe enthalten sein, die dann definitionsgemäß keine NCO-Gruppen tragen.

Je nach Art des bei der jeweiligen Oligomerisierungsreaktion hauptsächlich aus den vorher freien NCO-Gruppen gebildeten Strukturtyps unterscheidet man dabei verschiedene Produkte und Verfahren.

Von besonderer Bedeutung sind die sogenannte Dimerisierung unter Bildung von Uretdionstrukturen der Formel (Idealstruktur) **1,** beschrieben z.B. in der DE-A 16 70 720 und die sogenannte Trimerisierung unter Bildung von Isocyanurat-strukturen der Formel (Idealstruktur) **2,** beschrieben z.B. in der EP-A 0 010 589. Neben den letztgenannten Trimeren sind z.B. nach der Lehre der EP-A 0 798 299 zu den Isocyanuraten isomere, d.h. ebenfalls trimere Produkte mit Iminooxadiazindionstruktur der Formel (Idealstruktur) **3** erhältlich. Wird in der vorliegenden Schrift auf beide isomeren Trimere Bezug genommen, Isocyanurate und Iminooxadiazindione, wird generell von Trimeren bzw. Trimerisaten gesprochen, anderenfalls wird die exakte Bezeichnung gewählt.

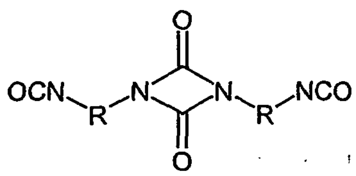

**1**

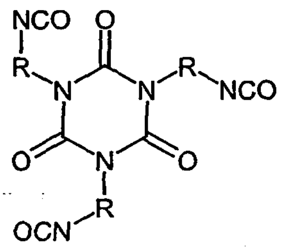

**2**

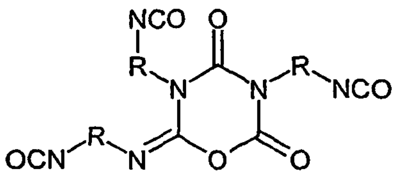

**3**

R = difunktioneller Substituent

Da die vollständige Umsetzung aller monomeren Diisocyanatmoleküle OCN-R-NCO in einem Reaktionsschritt durch Weiterreaktion der NCO-Gruppen in den Idealstrukturen **1** bis **3** in der Praxis zu hochmolekularen, extrem hochviskosen bzw. gelartigen, für einen Einsatz auf dem Lack- und Beschichtungsmittelsektor unbrauchbaren Produkten führen würde, verfährt man bei der katalysierten Herstellung von Lackpolyisocyanaten technisch so, dass nur ein Teil des Monomers umgesetzt, die Weiterreaktion durch Zugabe eines Katalysatorgiftes ("Abstopper") unterbunden und das nicht umgesetzte Monomer anschließend abgetrennt wird. Ziel ist es, bei möglichst niedriger Viskosität des monomerenarmen Lackpolyisocyanatharzes einen möglichst geringen Anteil nicht umgesetzten Monomers abtrennen zu müssen, d.h. angestrebt werden ein hoher Umsatz in der Reaktion einher gehend mit einer hohen Harzausbeute im nachgeschalteten Aufarbeitungsschritt bei gutem Eigenschaftsniveau der Polyisocyanatharze.

Dimere auf Basis von aliphatischen Diisocyanaten weisen eine deutlich niedrigere Viskosität auf als Trimere. Unabhängig vom Umsetzungsgrad bzw. der Harzausbeute sind sie aber streng linear, d.h. NCO-difunktionell aufgebaut. Trimere hingegen weisen die für eine hohe Vernetzungsdichte im Polymer und, daraus resultierend, gute Beständigkeitseigenschaften desselben nötige höhere Funktionalität auf. Ihre Viskosität steigt allerdings mit steigendem Umsatz in der Reaktion sehr schnell an. Im Vergleich zu den isomeren Isocyanuraten haben die Iminooxadiazindione bei gleicher NCO-Funktionalität des Polyisocyanatharzes eine deutlich niedrigere Viskosität (vgl. Proc. of the XXIV. Fatipec Conference, 8.-11. June 1998, Interlaken, CH, Vol. D, pp. D-136 - 137), das Viskositätsniveau der Uretdione wird allerdings nicht erreicht.

In der Praxis entstehen neben den für die Reaktion namensgebenden Produkten (Dimer für Dimerisierung, Trimer für Trimerisierung) fast immer simultan auch die jeweils anderen Reaktionsprodukte (Trimere bei der Dimerisierung, Uretdione bei der Trimerisierung). Deren Anteil ist allerdings jeweils gering.

So sind z.B. in den nach der Lehre der DE-A 16 70 720 (Trialkylphosphin-katalysierte Dimerisierung, vgl. auch Vergleichsbeispiel 1) zugänglichen Polyisocyanaten immer auch Trimere enthalten. Ihr Anteil läßt sich bei höherem Umsatz (umsatzabhängige Selektivität) sowie durch Temperaturerhöhung etwas steigern. Allerdings entstehen im letzeren Fall in zunehmendem Umfang gleichzeitig Carbodiimide und deren Folgeprodukte, insbesondere Uretonimine. Auf die negative Rolle, die derartige Produkte in der Technologie aliphatischer Polyisocyanate spielen, insbesondere ist das die schlechte Monomerenstabilität, ist an anderer Stelle bereits ausführlich eingegangen worden (vgl. EP-A 798 299, S. 4, Z. 42 bis S. 5, Z. 15). Ihre Bildung ist daher in jedem Fall unerwünscht und steht einem breiten, gefahrlosen Einsatz derartiger Polyisocyanate im Wege. Allgemein liegt der molare Uretdionanteil in Carbodiimid- bzw. Uretoniminfreien Verfahrensprodukten, die gemäß DE-A 16 70 720 hergestellt werden, über 60 %. Die Angabe "Mol-%" bezieht sich in der vorliegenden Schrift immer, so nicht anders ausgewiesen, auf die Summe der durch die Modifizierungsreaktion (Oligomerisierung) aus den vorher freien NCO-Gruppen des jeweiligen Monomers gebildeten Strukturtypen. Die molaren Anteile können z.B. durch NMR-spektroskopische Messungen erfasst werden (vgl. Beispiele).

Die Oligomerisierung aliphatischer Diisocyanate mit N-Silylverbindungen, beschrieben z.B. in den EP-A 57 653, EP-A 89 297, EP-A 187 105, EP-A 197 864 sowie WO 99/07765 (vgl. auch Vergleichsbeispiel 2), stellt gewissermaßen das Pendant zur Phosphinkatalyse mit umgekehrten Anteilen an Trimeren versus Uretdionen dar. Von Nachteil ist hier einerseits, dass die Selektivität der Katalyse stark umsatzabhängig ist - der Uretdionanteil in den Polyisocyanaten fällt mit steigendem Umsatz stark ab - andererseits ist der Iminooxadiazindionanteil in den Harzen sehr niedrig. Er liegt immer weit unter 5 mol-%. Nach der Lehre der WO 99/07765 ist eine schrittweise Modifizierung durch eine der silylaminkatalysierten Trimerisierung vorgeschaltete, thermisch induzierte, d.h. un- oder besser autokatalysierte, Uretdionbildung möglich. Diese Verfahrensweise hat allerdings neben den o.g. generellen Nachteilen der Silylaminkatalyse den Nachteil, dass die thermisch induzierte Uretdionbildung langsam ist, was zu technisch unakzeptabel langen Gesamtreaktionszeiten führt, insbesondere wenn man einen höheren Uretdionanteil anstrebt. Der molare Uretdionanteil in den Verfahrensprodukten der WO 99/07765 liegt nicht über 30 %.

Der Uretdionanteil in den nach der Lehre der EP-A 798 299 zugänglichen Produkten, das sind Trimerisate mit einem hohen Anteil an Iminooxadiazindionstrukturen, bezogen auf die Summe aus Isocyanurat- und Iminooxadiazindionstrukturen, ist ebenfalls gering (<< 20 mol-%). Die Selektivität dieser Reaktion ist ebenfalls umsatz- und temperaturabhängig.

Die besten **Verfahren des Standes der Technik** zum Erhalt möglichst niedrig viskoser Lackpolyisocyanate bei möglichst hoher NCO-Funktionalität sind wie folgt charakterisiert:

1. die Trimerisierungsreaktion wird bei sehr niedrigen Umsatzraten abgebrochen, da dann der Aufbau von höhermolekularen, für den Viskositätsanstieg verantwortlichen Spezies mit mehr als einem Isocyanuratring im Molekül noch nicht sehr weit fortgeschritten ist, oder
2. Polyisocyanate vom Uretdiontyp werden mit Trimerisatharzen abgemischt, die Uretdion-Komponente ist hier sozusagen der Reaktivverdünner.

Beide Verfahren haben aber spezifische **Nachteile.** So ist beim erstgenannten Verfahren die Harzausbeute sehr gering, was neben verfahrenstechnischen Problemen (Abtrennung einer großen Monomermenge) ökonomische (Raum-ZeitAusbeute) und ökologische Nachteile (Energiebedarf) verursacht. Bei der Abmischung verschiedener Lackharze ist neben dem generellen Nachteil eines zusätzlichen Verfahrensschrittes zu beachten, dass auch bei der Herstellung von Dimerisaten bei höherem Umsatz eine Viskositätserhöhung durch Molekulargewichtsaufbau infolge konsekutiver Addition weiterer Monomermoleküle an die NCO-Gruppen der Idealstruktur **1** eintritt (Bildung von Polymerketten), auch wenn diese nicht so ausgeprägt ist, wie bei den Trimerisaten (sternförmiges Voranschreiten des Oligomeraufbaus). Daher werden als Reaktivverdünner geeignete Dimerisatharze ebenfalls mit vergleichsweise geringer Harzaubeute hergestellt.

**Aufgabe der vorliegenden Erfindung** ist es daher, ein Verfahren zur Herstellung von Polyisocyanaten auf Basis aliphatischer Diisocyanate zur Verfügung zu stellen, die neben Trimerstrukturen einen hohen Anteil an Uretdionstrukturen aufweisen und in einem Reaktionsschritt hergestellt werden, d.h. ohne der katalysierten Reaktion vor- bzw. nachgeschaltete Schritte wie physikalisches Abmischen verschiedener Harze, Temperung vor der Reaktion etc., deren strukturelle Zusammensetzung; d.h. das molare Verhältnis von Uretdion- Isocyanurat- sowie Iminooxadiazindionstrukturen zueinander, wenig vom Umsatz abhängig ist und die sich durch eine niedrige Produktviskosität bei hoher NCO-Funktionalität und Harzausbeute auszeichnen.

Es wurde nun gefunden, dass diese Aufgabe erfindungsgemäß durch die Verwendung von salzartigen Verbindungen aus der Reihe der deprotonierten 1,2,3- sowie 1,2,4-Triazole als Katalysatoren zur Oligomerisierung monomerer aliphatischer Isocyanate gelöst wird.

Der Erfindung liegt die **überraschende Beobachtung** zugrunde, dass die Einwirkung salzartiger Verbindungen aus der Reihe der 1,2,3- sowie 1,2,4-Triazole (Triazolate) auf aliphatische Isocyanate simultan neben der Generierung von Isocyanurat-Strukturen zum einen in erheblichem Umfang zur Bildung der zu letzteren isomeren Iminooxadiazindionstrukturen führt, andererseits aber auch hohe Uretdionanteile in den Produkten zu bilden in der Lage ist und, was besonders überrascht, dass die Selektivität dieser Reaktion, d.h. das molare Verhältnis der verschiedenen Strukturtypen zueinander, kaum vom Ausmaß des Umsatzes an Monomer abhängt.

Produkte mit einer derartigen Kombination verschiedener Oligomerstrulcturtypen sind durch kein einstufiges Isocyanat-Oligomerisierungsverfahren des Standes der Technik zugänglich. Ebenso neu ist, dass ein nahezu umsatzunabhängiges molares Verhältnis der verschiedenen Strukturtypen zueinander bei hohem Uretdionanteil im Polyisocyanat erhalten wird.

Ganz allgemein ist es kaum möglich, Voraussagen bezüglich der Selektivität von Isocyanat-Oligomerisierungskatalysatoren zu machen. Hier ist man nach wie vor auf empirische Untersuchungen angewiesen.

Zwar sind neutrale, N-H- bzw. N-Alkyl-Gruppen tragende Heterocyclen bereits in der Polyisocyanatchemie eingeführt, ihre Verwendung beläuft sich allerdings nahezu ausschließlich auf Anwendungen als Blockierungsmittel für NCO-Gruppen (NH-Gruppen enthaltende Derivate, vgl. EP-A 0 741 157) bzw. als Stabilisatoren gegenüber einer UV-induzierten Zersetzung des aus den Polyisocyanaten hergestellten Lackfilmes, z.B. substituierte Benztriazole die im Molekül weitere OH-Gruppen enthalten, vgl. z.B. DE-A 198 28 935, WO 99/67226 und darin zit. Literatur.

Hierbei wird keine Oligomerisierung der Isocyanatgruppen angestrebt, sondern ihre thermisch reversible Desaktivierung zur Ermöglichung einer einkomponentigen Verarbeitung bzw. eine Stabilisierung des Polyurethan-Kunststoffes bzw. Lackes. Eine Oligomerisierung der Isocyanatgruppen wäre in beiden Fällen sogar von Nachteil.

**Gegenstand der Erfindung** ist ein Verfahren zur Herstellung aliphatischer Polyisocyanate durch katalysierte Umsetzung aliphatischer Diisocyanate, dadurch gekennzeichnet, dass als Katalysatoren salzartige Verbindungen eingesetzt werden, die im Anion 5 bis 97,1 Gew.-% an 1,2,3- und/oder 1,2,4-Triazolatstrukturen, (berechnet als $C_2N_3$, Molekulargewicht = 66) enthalten.

**Gegenstand der Erfindung** sind weiterhin die nach diesem Verfahren erhaltenen Polyisocyanate und ihre Verwendung zur Herstellung von Polyurethan-Kunststoffen und -Beschichtungen.

Als Ausgangsstoffe zur Herstellung der nach dem erfindungsgemäßen Verfahren zugänglichen Polyisocyanate eignen sich prinzipiell alle aliphatischen Isocyanate im Sinne der eingangs genannten Definition, rein oder als Mischung untereinander. Beispielhaft aufgeführt seien alle Regio- und Stereoisomeren der nachstehend genannten Isocyanate: Bis (isocyanatoalkyl)ether, Bis- und Tris-(isocyanatoalkyl)-benzole, -toluole, sowie -xylole, Propandiisocyanate, Butandiisocyanate, Pentandiisocyanate, Hexandiisocyanate (z.B. Hexamethylendiisocyanat, HDI), Heptandiisocyanate, Octandiisocyanate, Nonandi- (z.B. Trimethyl-HDI, in der Regel als Gemisch der 2,4,4- und 2,2,4-Isomeren, TMDI) und triisocyanate (z.B. 4-Isocyanatomethyl-1,8-octandiisocyanat), Dekandi- und triisocyanate, Undekandi-und triisocyanate, Dodecandi- und triisocyanate, 1,3- sowie 1,4-Bis(isocyanatomethyl)cyclohexane ($H_6XDI$), 3-Isocyanatomethyl-3,5,5-trimethylcyclohexyliso-cyanat (Isophorondiisocyanat, IPDI), Bis-(4-isocyanatocyclohexyl)methan ($H_{12}MDI$) sowie Bis (isocyanatomethyl)norboman (NBDI).

Als Ausgangsstoff zur Herstellung der nach dem erfindungsgemäßen Verfahren zugänglichen Polyisocyanate werden insbesondere aliphatische Diisocyanate eingesetzt, die im Kohlenstoffgerüst außer den NCO-Gruppen 4 bis 20 Kohlenstoffatome aufweisen, wobei die NCO-Gruppen an primär-aliphatische Kohlenstoffatome gebunden sind.

Vorzugsweise werden als Ausgangsstoffe zur Herstellung der nach dem erfindungsgemäßen Verfahren zugänglichen Polyisocyanate aliphatische Diisocyanate mit ausschließlich primär gebundenen NCO-Gruppen wie HDI, TMDI, 2-Methylpentan-1,5-diisocyanat (MPDI), 1,3- sowie 1,4-Bis(isocyanatomethyl)cyclohexan ($H_6XDI$, ggf. als Isomerengemisch) und/oder Bis(isocyanatomethyl)norbornan (NBDI ggf. als Isomerengemisch) eingesetzt.

Die anteilige Verwendung monofunktioneller Isocyanate ist in besonderen Fällen ebenfalls möglich, aber nicht bevorzugt.

Das Herstellverfahren für die im erfindungsgemäßen Verfahren einzusetzenden Ausgangsisocyanate ist für die Durchführung des erfindungsgemäßen Verfahrens unkritisch, so können die Ausgangsisocyanate mit oder ohne Verwendung von Phosgen generiert worden sein.

Die im erfindungsgemäßen Verfahren einzusetzenden Katalysatoren sind zum Teil kommerziell zugänglich, z.B. als Natriumsalze. Andererseits ist ihre Herstellung, beispielsweise wenn andere Gegenionen als $Na^+$ zum katalytisch aktiven Anion eingesetzt werden sollen, sehr einfach möglich. Näheres findet sich in den Beispielen.

Als Katalysatoren werden salzartige Verbindungen eingesetzt, die im Anion Triazolatstrukturen der allgemeinen Formeln **(I)** und/oder **(II)**

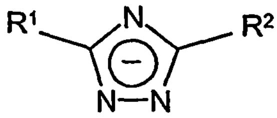

**(I)**

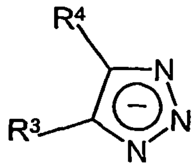

**(II)**

enthalten, in welchen

$R^1$, $R^2$, $R^3$ und $R^4$ für gleiche oder verschiedene Reste stehen und jeweils ein Wasserstoffatom, ein Halogenatom aus der Reihe Fluor, Chlor oder Brom oder eine Nitrogruppe, einen gesättigten oder ungesättigten aliphatischen oder cycloaliphatischen, einen gegebenenfalls substituierten aromatischen oder araliphatischen Rest, der bis zu 20 Kohlenstoffatome und gegebenenfalls bis zu 3 Heteroatome aus der Reihe Sauerstoff, Schwefel, Stickstoff enthalten und gegebenenfalls durch Halogenatome oder Nitrogruppen substituiert sein kann, bedeuten
und wobei

$R^3$ und $R^4$ auch in Kombination untereinander zusammen mit den Kohlen-stoffatomen des 1,2,3-Triazolatfünfriges und gegebenenfalls einem weiteren Stickstoffatom oder einem Sauerstoffatom anellierte Ringe mit 3 bis 6 Kohlenstoffatomen bilden können.

Bevorzugt werden als Katalysatoren salzartige Verbindungen eingesetzt, die im Anion Triazolatstrukturen der allgemeinen Formel **(I)** enthalten, in welcher

$R^1$ und $R^2$ für gleiche oder verschiedenen Reste stehen und jeweils ein Wasserstoffatom, ein Halogenatom aus der Reihe Fluor, Chlor oder Brom oder eine Nitrogruppe, einen gesättigten aliphatischen oder cycloaliphatischen, einen gegebenenfalls substituierten aromatischen oder araliphatischen Rest, der bis zu 12 Kohlenstoffatome und gegebenenfalls bis zu 3 Heteroatome aus der Reihe Sauerstoff, Schwefel, Stickstoff enthalten und gegebenenfalls durch Halogenatome oder Nitrogruppen substituiert sein kann, bedeuten.

und
salzartige Verbindungen eingesetzt werden, die im Anion Triazolatstrukturen der allgemeinen Formel **(II)** enthalten, in welcher

$R^3$ und $R^4$ für gleiche oder verschiedenen Reste stehen und jeweils ein Wasser-stoffatom, ein Halogenatom aus der Reihe Fluor, Chlor oder Brom oder eine Nitrogruppe, einen gesättigten oder ungesättigten aliphatischen oder cycloaliphatischen, einen gegebenenfalls substituierten aromatischen oder araliphatischen Rest, der bis zu 12 Kohlenstoffatome und gegebenenfalls bis zu 3 Heteroatome aus der Reihe Sauerstoff, Schwefel, Stickstoff enthalten und gegebenenfalls durch Halogenatome oder Nitrogruppen substituiert sein kann, bedeuten, und auch in Kombination untereinander zusammen mit den Kohlenstoffatomen des 1,2,3-Triazolatfünfriges und gegebenenfalls einem weiteren Stickstoffatom oder einem Sauerstoffatom anellierte Ringe mit 3 bis 6 Kohlenstoffatomen bilden können.

Weiterhin kann auch das optimale "Design" des Anions in Hinblick auf die katalytische Aktivität, die thermische Stabilität und die Selektivität der Reaktion im Sinne der o.g. Aufgabenstellung durch geeignete Substitution am heterocyclischen Fünfring an das zu oligomerisierende Isocyanat oder die gewünschten Reaktionsbedingungen angepasst werden. Allgemein eignen sich zur Herstellung der erfindungsgemäßen Polyisocyanate salzartige Katalysatoren mit Triazolat-Anion wobei in der neutralen Triazolform mindestens ein an ein Ringstickstoffatom gebundenes, Zerewittinoff-aktives Wasserstoffatom vorhanden sein muß. Beispiele für diese, den Katalysatoren zu Grunde liegenden NH-Gruppen aufweisenden Triazole sind zum einen die Grundkörper 1,2,3- sowie 1,2,4-Triazol sowie substituierte Derivate, die sich durch Ersatz eines oder beider C-gebundener H-Atome durch, gegebenenfalls substituierte (O, N, S, Halogen) Alkyl- oder Arylgruppen ableiten, z.B. 4-Chloro-5-carbomethoxy-1,2,3-triazol, 4-Chloro-5-cyano-1,2,3-triazol oder 3,5-Dibromtriazol. Schließlich können bei den 1,2,3-Triazolen die beiden benachbarten C-Atome ihrerseits wieder Teil eines annelierten, gegebenenfalls weitere Heteroatome (O, N, S) enthaltenden Ringsystems sein. Beispiele hierfür sind 1,2,3-Benztriazol und substituierte 1,2,3-Benztriazole wie 5-Fluor-1,2,3-benztriazol, 5-Trifluormethyl-1,2,3-benztriazol, 5-Nitro-1,2,3-benztriazol, 5-Methoxy-1,2,3-benztriazol, 5-Chlor-1,2,3-benztriazol, 5-Tetrafluoroethoxy-1,2,3-benztriazol, 5-Trifluorthio-1,2,3-benztriazol, 4,6-Bis(trifluormethyl)-1,2,3-benztriazol, 4-Trifluormethoxy-5-chloro-1,2,3-benztriazol, sowie heteroaromatisch annelierte 1,2,3-Triazole wie die isomeren Pyridinotriazole, z.B. das 1H-1,2,3-Triazolo[4,5-b]pyridin - im weiteren Text kurz Pyridinotriazol - und Azapurin.

Bevorzugt werden im erfindungsgemäßen Verfahren als Katalysatoren Salze des 1,2,4-Triazols, des 1,2,3-Triazols, des 1,2,3-Benztriazols und/oder des Pyridinotriazols eingesetzt.

Bei den vorstehend genannten Verbindungen handelt es sich überwiegend um in der Praxis gut eingeführte, literaturbekannte Stoffe. Die Synthese der Fluor enthaltenden Derivate wird beispielsweise in der DE-A 43 02 461 beschrieben.

Das Kation für die im erfindungsgemäßen Verfahren einzusetzenden Katalysatoren kann weitgehend variieren. Will man den Katalysator bzw. seine im Zuge der Desaktivierung entstehenden Folgeprodukte im Anschluss an die Oligomerisierungsreaktion vom Produkt abtrennen, kann es vorteilhaft sein, polare, hochgeladene Gegenionen wie z.B. Alkali- oder Erdalkalikationen einzusetzen. Wird eine möglichst homogene Verteilung des Katalysators im für die Reaktion verwendeten Isocyanat(gemisch) sowie im Polyisocyanatharz gewünscht, wählt man hierfür lipophile Vertreter wie z.B. Ammonium- oder Phosphoniumspezies. Letztere lassen sich beispielsweise problemlos durch einfaches Zusammengeben eines Natriumtriazolates und eines Oniumchlorides, bevorzugt in Lösungsmitteln, die das dabei ausfallende Natriumchlorid nicht gut lösen, herstellen und durch Filtration sowie anschließendes Einengen auf die gewünschte Konzentration und Reinheit, bringen. Bei letzterem Aufarbeitungsschritt fallen in der Regel Reste anfänglich noch gelösten Natriumchlorides ebenfalls aus und können abfiltriert werden. Beispiele hierfür geeigneter Oniumchloride sind Tetra-methyl-, -ethyl-, -propyl-, -butyl-, -hexyl- und octyl-ammoniumchlorid, aber auch gemischt substituierte Ammoniumsalze wie Benzyl-trimethylammoniumchlorid oder Methyl-trialkylammoniumchloride wobei Alkyl für geradkettige oder verzweigte $C_8$ bis $C_{10}$-Reste steht (Handelsname z.B. Aliquat® oder Adogen®), sowie Tetra-ethyl-, -propyl-, -butyl-, -hexyl- und octylphosphoniumchlorid, aber auch gemischt substituierte Phosphoniumsalze wie Alkyltriethyl, tributyl-, trihexyl-, -trioctyl- und/oder tridodecylphosphoniumchlorid wobei Alkyl für geradkettige oder verzweigte $C_4$ bis $C_{20}$-Reste steht (Handelsname z.B. Cyphos® wie Cyphos® 443, Cyphos® 3453, Cyphos® 3653 etc.).

Zur Durchführung des erfindungsgemäßen Verfahrens werden Katalysatorkonzentrationen, bezogen auf die Masse an eingesetztem/r Ausgangs(di)isocyanat/mischung und die Masse des eingesetzten Katalysators, zwischen 5 ppm und 5%, bevorzugt zwischen 10 ppm und 1 Gew.-% eingesetzt.

Die im erfindungsgemäßen Verfahren eingesetzten Katalysatoren können in Substanz oder in Lösung verwendet werden. Als Lösungsmittel kommen dabei prinzipiell alle Stoffe infrage, in denen der Katalysator unzersetzt löslich ist und die mit Isocyanaten nicht bzw. nur zu in der Polyurethanchemie gängigen, nicht störenden Folgeprodukten wie Harnstoffen, Biureten, Urethanen sowie Allophanaten reagieren. Wenn Katalysatorlösungsmittel Verwendung finden, so werden als Lösungsmittel bevorzugt reaktive Verbindungen eingesetzt, die mit den als Ausgangskomponente verwendeten Diisocyanaten zu in der Polyurethanchemie gängigen Folgeprodukten reagieren und daher nicht im Anschluss an die Reaktion abgetrennt werden müssen. Hierzu zählen geradkettige oder verzweigte, gegebenenfalls mehr als eine OH-Gruppe enthaltende Alkohole mit 1 bis 20 C-Atomen und gegebenenfalls weiteren Heteroatomen, bevorzugt Sauerstoff, im Molekül. Beispielhaft genannt seinen Methanol, Ethanol, 1- sowie 2-Propanol, die isomeren Butanole, 2-Ethylhexanol, 2-Ethylhexan-1,3-diol, 1,3- sowie 1,4-Butandiol und 1-Methoxy-2-propanol. Besonders vorteilhaft ist, dass die o.g. Katalysatoren auch in sehr konzentrierter Lösung verwendet werden können und dabei trotzdem kaum zur Ausbildung von spontanen Übervernetzungen im Edukt führen.

Zur Unterbindung der Weiterreaktion nach Erreichen des gewünschten Umsetzungsgrades ("Abstoppen"), eignen sich bekannte Methoden des Standes der Technik, wie Entfernung des Katalysators durch Extraktion oder Filtration - letzteres gegebenenfalls nach erfolgter adsorptiver Bindung an inerte Trägermaterialien - Inaktivierung des Katalysatorsystems durch thermische Desaktivierung und/oder durch Zugabe (unter)stöchiometrischer Mengen an Säuren oder Säurederivaten, z.B. Benzoylchlorid, Phthaloylchlorid, phosphinige-, phosphonige- und/oder phosphorige Säure, Phosphin-, Phosphon- und/oder Phosphorsäure sowie die sauren Ester der letztgenannten 6 Säuretypen, Schwefelsäure und ihre sauren Ester und/oder Sulfonsäuren.

Nach einer besonderen Ausführungsform des Verfahrens kann die Herstellung der erfindungsgemäßen Polyisocyanate in kontinuierlicher Fahrweise, z.B. in einem Rohrreaktor, vorgenommen werden.

Das erfindungsgemäße Verfahren verläuft ohne der katalysierten Oligomerisierungsreaktion vor- bzw. nachgeschaltete Modifizierungsschritte wie thermische Aktivierung des/r Ausgangs(di)isocyanatels vor der Katalysatorzugabe oder eine nachträglichen Abmischung verschiedener Harze.

Die erfindungsgemäße katalytische Umsetzung kann in einem sehr weiten Temperaturbereich durchgeführt werden. Üblich sind Reaktionstemperaturen oberhalb 0°C bevorzugt wird von 20 bis 100°C, besonders bevorzugt von 40 bis 90°C gearbeitet.

Die erfindungsgemäßen Verfahrensprodukte lassen sich durch die üblichen Verfahren des Standes der Technik

isolieren und reinigen, wie z.B. Dünnschichtdestillation, Extraktion, Kristallisation und/oder Molekulardestillation. Sie fallen dabei als farblose oder nur schwach gefärbte Flüssigkeiten oder Feststoffe an.

Feste Polyisocyante fallen in der Regel bei Einsatz cycloaliphatischer Diisocyanate als Ausgangsstoffe im erfindungsgemäßen Verfahren an. Diese Feststoffe werden üblicherweise in den weiter unten aufgeführten Lacklösungsmiteln gelöst. Diese Lösungen weisen bei gleicher Konzentration eine niedrigere Viskosität auf, als entsprechende Lösungen von Polyisocyanaten cycloaliphatischer Diisocyanate die überwiegend Isocyanuratgruppen aufweisen.

Die erfindungsgemäß hergestellten Verfahrensprodukte stellen vielseitig verwendbare Ausgangsmaterialien zur Herstellung von Polymeren wie gegebenenfalls geschäumten Kunststoffen sowie Lacken, Beschichtungsmitteln, Klebstoffen und Zuschlagstoffen dar.

Insbesondere zur Herstellung von Ein- und Zweikomponenten-Polyurethanlacken eignen sie sich, gegebenenfalls in NCO-blockierter Form, aufgrund ihrer im Vergleich zu Polyisocyanaten vom Trimertyp verringerten Viskosität bei ansonsten gleich hohem bzw. verbessertem Eigenschaftsprofil. Sie können hierzu rein oder gegebenenfalls in Verbindung mit anderen Isocyanatderivaten des Standes der Technik, wie Uretdion-, Biuret-, Allophanat-, Isocyanurat-, Urethan- sowie Carbodiimid-Polyisocyanaten, deren freie NCO-Gruppen gegebenenfalls mit Blockierungsmitteln desaktiviert wurden, eingesetzt werden.

Die resultierenden Kunststoffe und Beschichtungen sind außerordentlich hochwertige Produkte mit dem für die genannten, bewährten Systeme des Standes der Technik typischen Eigenschaftsprofil.

Bei der Verwendung z.B. als Vernetzerkomponente in 2K-Beschichtungen werden die erfindungsgemäßen Verfahrensprodukte in der Regel mit OH- und/oder NH-Komponenten kombiniert, wie sie aus 2K-Polyurethansystemen an sich bekannt sind, so z.B. hydroxyfunktionellen Polyestern, Polyacrylaten, Polycarbonaten, Polyethern, Polyurethanen sowie polyfunktionellen Aminen. Sie können aber auch einkomponentig z.B. zur Herstellung (anteilig) feuchtigkeitshärtender Kunststoffe und Beschichtungen verwendet werden.

Neben den erfindungsgemäß hergestellten Verfahrensprodukten und den gegebenenfalls mitverwendeten weiteren Bindemittelkomponenten und Lacklösungsmitteln oder Lacklösungsmittelgemischen wie beispielsweise Toluol, Xylol, Cyclohexan, Chlorbenzol, Butylacetat, Ethylacetat, Ethylglykolacetat, Methoxypropylacetat, Aceton, Testbenzin, höher substituierte Aromaten (Solventnaphtha®, Solvesso®, Shellsol®, Isopar®, Nappar®, Diasol®) können in den Beschichtungen auch weitere Hilfs- und Zusatzmittel verwendet werden, wie z.B. Benetzungsmittel, Verlaufsmittel, Hautverhinderungsmittel, Antischaummittel, Mattierungsmittel, viskositätsregulierende Stoffe, Pigmente, Farbstoffe, UV-Absorber, Katalysatoren und Stabilisatoren gegen thermische und oxidative Einflüsse.

Die erfindungsgemäß hergestellten Isocyanate können vorzugsweise zur Herstellung von Polyurethankunststoffen und -Beschichtung bzw. als Zuschlagstoff zur Ausrüstung einer Vielzahl von Materialien dienen, wie z.B. Holz, Kunststoff, Leder, Metall, Papier, Beton, Mauerwerk, Keramik und Textil.

## Beispiele

Alle Prozentangaben sind, soweit nicht anders vermerkt, als Gewichtsprozent zu verstehen.

Die Ermittlung des NCO-Gehaltes der in den Beispielen und Vergleichsbeispielen beschriebenen Harze erfolgt durch Titration gemäß DIN 53 185.

Die dynamischen Viskositäten wurden bei 23°C mit dem Viskosimeter VT 550, Platte-Kegel Meßanordnung PK 100, der Fa. Haake bestimmt. Durch Messungen bei unterschiedlichen Schergeschwindigkeiten wurde sichergestellt, dass das Fließverhalten der beschriebenen erfindungsgemäßen Polyisocyanatmischungen wie auch das der Vergleichsprodukte dem idealer Newtonscher Flüssigkeiten entspricht. Die Angabe der Schergeschwindigkeit kann deshalb entfallen.

Die Angabe von Mol-% bzw. des molaren Verhältnisses unterschiedlicher Struktur typen zueinander basiert auf NMR-spektroskopischen Messungen. Sie bezieht sich immer, so nicht anders ausgewiesen, auf die Summe der durch die Modifizierungsreaktion (Oligomerisierung) aus den vorher freien NCO-Gruppen gebildeten Strukturtypen. Die Messungen erfolgen auf dem Gerät DPX 400 der Fa. Bruker an ca. 5%igen ($^1$H-NMR) bzw. ca. 50%igen ($^{13}$C-NMR) Proben in trockenem $CDCl_3$ bei einer Frequenz von 400 MHz ($^1$H-NMR) bzw. 100 MHz ($^{13}$C-NMR). Als Referenz für die ppm-Skale werden geringe Mengen von Tetramethylsilan im Lösungsmittel mit einer $^1$H-chem. Verschiebung von 0 ppm ($^1$H-NMR) bzw. das Lösungsmittel selbst ($CDCl_3$) mit einer Verschiebung von 77,0 ppm ($^{13}$C-NMR) gewählt. Daten für die chemische Verschiebung der in Frage kommenden Verbindungen sind der Literatur entnommen (vgl. Die Angewandte Makromolekulare Chemie 1986, 141, 173-183 und darin zit. Lit) bzw. durch Vermessung von Modellsubstanzen gewonnen worden. Das in Anlehnung an das in Ber. d. dtsch. Chem. Ges. 1927, 60, 295 beschriebene Verfahren aus Methylisocyanat zugängliche 3,5-Dimethyl-2-methylimino-4,6-diketo-1,3,5-oxadiazin (Methylisocyanat-Trimer vom Iminooxadiazindiontyp) weist folgende NMR-chem. Verschiebungen auf (in ppm): 3,09; 3,08 und 2,84 ($^1$H-NMR, $C\underline{H}_3$) bzw. 148,3; 144,6 und 137,3 ($^{13}$C-NMR, $\underline{C}$=O/$\underline{C}$=N). Iminooxadiazindione aus aliphatischen Diisocyanaten wie z.B. HDI haben sehr ähnliche $^{13}$C-NMR chem. Verschiebungen der $\underline{C}$=O/$\underline{C}$=N Ringatome und sind zweifelsfrei als solche von anderen Isocyanat-Folgeprodukten zu unterscheiden.

Der überwiegende Teil der Reaktionen wird beispielhaft mit HDI als Edukt durchgeführt. Das geschieht nur zur Verdeutlichung der Vorteile des erfindungsgemäßen Verfahrens und soll keine Einschränkung der vorliegenden Erfindung auf die beschriebenen Systeme bzw. Reaktionsbedingungen bedeuten.

**Katalysatorherstellung**

Natrium-1,2,4-Triazolat ist kommerziell von der Fa. Aldrich erhältlich oder kann durch Deprotonierung von 1,2,4-Triazol, z.B. mit einer methanolischen Lösung von Natriummethanolat, $Na^+$ $MeO^-$, hergestellt werden. Die so erhaltenen, methanolischen Lösungen des Natriumsalzes sind als solche, ggf. nach vorheriger Umkristallisation des Salzes, für die Katalyse eingesetzt worden und werden darüber hinaus zur Herstellung von Katalysatorsystemen mit anderen als dem $Na^+$-Kation als Gegenion zum Azolat-Anion verwendet. Durch Umsetzung der NH-aciden Neutralverbindungen mit anderen Alkali- oder Erdalkali-alkoholaten bzw. -hydroxiden (Li, K, $NH_4$, Mg etc.) lassen sich weitere Katalysatorsysteme generieren, die sowohl in der erfindungsgemäßen Reaktion als auch für die Herstellung von Katalysatorsystemen mit anderen als den o.g. Alkali- oder Erdalkali-Kationen als Gegenion zum Azolat-Anion zum Einsatz gelangen können.

Als Beispiel wird anschließend die Synthese eines Tetrabutylphosphoniumderivates beschrieben. Andere Alkali-, Tetraalkyl-ammonium- sowie -phosphonium-derivate werden völlig analog erhalten.

<u>Tetrabutylphosphonium-1,2,4-triazolat</u>

In einer 3-Halskolben Rührapparatur mit mechanischem Rührer, Innenthermometer und Rückflusskühler, der an eine Inertgasanlage angeschlossen ist (Stickstoff), werden zu 0,1 mol (6,9 g) 1,2,4-Triazol (Fa. Aldrich), gelöst in 20 ml Methanol, 0,1 mol (18 g) einer 30 %igen methanolischen Natriummethanolat-Lösung (Fa. Aldrich) bei Zimmertemperatur getropft. Nach vollständiger Zugabe wird eine Stunde bei Zimmertemperatur nachgerührt und anschließend werden 0,1 mol (41,3 g) einer 71,4 %igen Lösung von Tetrabutylphosphoniumchlorid, $Bu_4P^+$ $Cl^-$, in isoPropanol (Cyphos® 443P, Fa. Cytec) zugetropft. Die Ausscheidung von Natriumchlorid setzt unmittelbar nach Zugabe der ersten Tropfen an Tetrabutylphosphoniumchloridlösung ein. Nach vollständiger Zugabe wird eine Stunde bei Zimmertemperatur nachgerührt, filtriert und am Rotationsverdampfer (Badtemperatur < 50°C, ca. 1 mbar) eingeengt. Der Rückstand wird erneut filtriert und die resultierende klare, nahezu farblose Flüssigkeit mit 0,1 n HCl gegen Phenolphthalein titriert. Ihr Gehalt beläuft sich auf 73 % an Tetrabutylphosphonium-1,2,4-triazolat. Duch Zugabe von weiterem Methanol bzw. anderen Katalysatorlösungsmitteln wird die gewünschte Konzentration eingestellt, die Lösungen enthalten neben dem in Tab. 1 aufgeführten Alkohol in der Regel geringe Mengen Methanol aus der o.g. Synthese.

Weitere Azolat-Systeme auf Basis von 1,2,3-Triazolaten, Benztriazolaten etc. werden völlig analog aus den zugrundeliegenden, N-H-Gruppen aufweisenden Neutralverbindungen erhalten. Der Gehalt an aktivem Katalysator wird nach Aufarbeitung durch einfache acidimetrische Titration mit 0,1 n HCl bestimmt. Eine Übersicht der in den Beispielen verwendeten Katalysatoren findet sich in Tabelle 1.

<u>**Tabelle 1**</u> Katalysatorenübersicht

| lfd. Nr. | Kation | Anion | Lösungsmittel | Konzentration [%] |
|---|---|---|---|---|
| 1 | Na | 1,2,3-Triazolat | i-PrOH | 3,3 |
| 2 | K | 1,2,3-Triazolat | i-PrOH | 10 |
| 3 | $Bu_4P$ | 1,2,3-Triazolat | i-PrOH | 26,4 |
| 4 | $C_{14}H_{29}(C_6H_{13})_3P$ | 1,2,3-Triazolat | 1-Methoxy-2-propanol | 83 |
| 5 | $Me_4N$ | 1,2,4-Triazolat | n-BuOH | 5,0 |
| 6 | $Et_3NBz$ | 1,2,4-Triazolat | 2-Ethylhexanol | 26,5 |
| 7 | $Bu_4P$ | 1,2,4-Triazolat | 2-Ethylhexanol | 10 |
| 8 | $C_{14}H_{29}(C_6H_{13})_3P$ | 1,2,4-Triazolat | 1-Methoxy-2-propanol | 55,1 |
| 9 | Na | Benztriazolat | i-PrOH | 20 |
| 10 | $Bu_4P$ | Benztriazolat | i-PrOH | 32,4 |
| 11 | $Bu_4P$ | Benztriazolat | 2-Ethylhexanol | 37,6 |
| 12 | $Bu_4P$ | Pyridinotriazolat | 1-Methoxy-2-propanol | 57,4 |

(fortgesetzt)

| lfd. Nr. | Kation | Anion | Lösungsmittel | Konzentration [%] |
|---|---|---|---|---|
| 13 | $BzMe_3N^+$ | Pyridinotriazolat | MeOH | 47,5 |

**Beispiel 1** Herstellung von HDI-Polyisocyanaten (erfindungsgemäß)

Jeweils 200 g (1,19 mol) frisch destilliertes HDI werden bei 60°C zunächst im Vakuum (0,1 mbar) zur Entfernung gelöster Gase 1 h gerührt, anschließend mit trockenem Stickstoff belüftet und unter Rühren auf die in Tab. 2 mit "min" bezeichnete Tempertur gebracht. Anschließend wird mit dem in Tab. 2 angegebenen Katalysator tropfenweise versetzt, bis die Reaktion, erkennbar an einem Temperaturanstieg um ein bis zwei Grad, einsetzt. Angaben zum Katalysator sowie zu den Reaktionsbedingungen sind Tab. 2 zu entnehmen. Nach Erreichen des gewünschten Umsetzungsgrades, detektiert durch den Brechungsindex, $n_{20}^{D}$ wird die Weiterreaktion durch Zugabe der zur jeweils verwendeten Katalysatormenge stöchiometrischen Menge des in Tab. 2 aufgeführten Stoppers unterbrochen. Die Rohprodukte werden anschließend durch Dünnschichtdestillation bei 120°C/0,1 mbar in einem Kurzwegverdampfer vom nicht umgesetzten Monomer bis auf einen Restgehalt unter 0,5 % befreit. Anschließend wird die Produktzusammensetzung hinsichtlich der strukturellen Zusammensetzung wie eingangs beschrieben analysiert. Der gaschromatografisch bestimmte Restmonomergehalt liegt bei allen erfindungsgemäß hergestellten Produkten unter 0,5 % und steigt auch bei der Lagerung weder bei Zimmertemperatur noch bei 50°C im Trockenschrank innerhalb von 3 Monaten auf Werte oberhalb 0,5 % an. Ausgewählte Analysen- und Berechnungsergebnissse sind in Tabelle 2 zusammengestellt. Uretonimine sind in keinem der Produkte nachweisbar.

**Beispiel 2** Herstellung von HDI-Polyisocyanaten mit variierendem Umsatz (erfindungsgemäß)

Es wird unter Verwendung von Katalysatorlösung 7 verfahren wie in Beispiel 1 beschrieben. Im Verlauf der Reaktion werden bis kurz vor Erreichen des Gelpunktes 6 Proben entnommen (a 1-2 g), die mit einem ca. 100%igen Überschuß an Di-n-butylphosphat abgestoppt werden. Zur Bestimmung des Umsatzes wird der Gehalt an nicht umgesetztem Monomer gaschromatografisch bestimmt. Das molare Verhältnis der gebildeten Strukturtypen wird mittels $^{13}C$-NMR-Spektroskopie in ca. 80 %iger Lösung in $CDCl_3$ analysiert. Es ändert sich über den genannten Umsatzbereich praktisch nicht. Uretonimine sind nicht nachweisbar (vgl. Tab. 3).

Tabelle 3 Abhängigkeit der Produktzusammensetzung (Strukturtypen) vom Umsatz bei der erfindungsgemäßen Herstellung von HDI-Polyisocyanaten

| Bsp. 2... | Harzausbeute 1) [%] | $^{13}C$-NMR [mol-% der NCO-Folgeprodukte] 2) | | |
|---|---|---|---|---|
| | | Uretdione | Isocyanurate | Iminooxadiazindione |
| a | 30,6 | 39,1 | 49,9 | 11,0 |
| b | 53,8 | 38,6 | 51,1 | 10,4 |
| c | 62,3 | 40,3 | 49,8 | 9,9 |
| d | 75,5 | 40,9 | 49,2 | 9,8 |

1) Harzausbeute = 100 - HDI-Gehalt, letzterer wird gaschromatographisch bestimmt
2) Summe der Uretdion-, Isocyanurat- und Iminooxadiazindionstrukturen auf 100 % normiert

**Tabelle 2** Angaben zur Herstellung und zu ausgewählten Eigenschaften der erfindungsgemäß hergestellten HDI-Polyisocyanate

| Bsp. 1... | Angaben zum Katalysator | | Angaben zur Reaktionsführung | | | | | Harzdaten | | | | | |
|---|---|---|---|---|---|---|---|---|---|---|---|---|---|
| | Nr. (vgl. Tab. 1 | Menge bezogen auf HDI [ppm] | T [°C] min | T [°C] max | Abstopper[1)] | Reaktionszeit bis Stopperzugabe [h] | $n_D^{20}$ bei Stopperzugabe | Ausb.[2)] [%] | NCO-Gehalt [%] | Viskosität bei 23°C [mPa·s] | Iminooxadiazindione [mol-%][3)] | Isocyanurate [mol-%][3)] | Uretdione [mol-%][3)] |
| a | 1 | 100 | 58 | 64 | DBP | 1,5 | 1,4600 | 17,8 | 22,9 | 570 | 7 | 67 | 27 |
| b | 2 | 100 | 58 | 67 | DBP | 0,5 | 1,4599 | 18,1 | 23,1 | 330 | 10 | 49 | 40 |
| c | 3 | 240 | 60 | 66 | DBP | 0,5 | 1,4662 | 30,6 | 22,6 | 290 | 21 | 35 | 44 |
| d | 3 | 1200 | 58 | 72 | DBP | 3,5 | 1,4775 | 54,9 | 20,7 | 775 | 25 | 32 | 43 |
| e | 4 | 1500 | 59 | 69 | TOS | 3,5 | 1,4668 | 34,1 | 23,0 | 276 | 27 | 22 | 51 |
| f | 4 | 1500 | 59 | 71 | DBP | 4,1 | 1,4665 | 33,2 | 23,0 | 265 | 27 | 22 | 52 |
| g | 4 | 2500 | 79 | 85 | DBP | 6,5 | 1,4654 | 30,8 | 22,8 | 203 | 23 | 20 | 58 |
| h | 5 | 130 | 60 | 65 | DBP | 5,0 | 1,4665 | 30,1 | 22,2 | 1700 | 7 | 80 | 13 |
| i | 6 | 1020 | 57 | 67 | DBP | 1,0 | 1,4661 | 29,9 | 22,4 | 940 | 13 | 61 | 26 |
| j | 7 | 1050 | 57 | 60 | DBP | 3,0 | 1,4652 | 29,1 | 21,8 | 782 | 15 | 57 | 28 |
| k | 8 | 1000 | 59 | 74 | TOS | 1,75 | 1,4645 | 28,3 | 22,6 | 1040 | 7 | 72 | 21 |
| l | 9 | 100 | 60 | 65 | DBP | 1,5 | 1,4661 | 30,8 | 22,0 | 685 | 11 | 56 | 33 |
| m | 10 | 1100 | 60 | 70 | DBP | 1,0 | 1,4671 | 34,2 | 22,2 | 508 | 18 | 47 | 35 |
| n | 11 | 1690 | 54 | 67 | DBP | 19,0 | 1,4924 | 75,2 | 18,1 | 6600 | 28 | 35 | 36 |
| o | 11 | 1510 | 59 | 68 | DBP | 1,5 | 1,4771 | 54,2 | 20,1 | 682 | 27 | 26 | 47 |
| p | 11 | 5060 | 96 | 107 | DBP | 5,0 | 1,4759 | 49,6 | 20,6 | 950 | 23 | 35 | 42 |
| q | 12 | 570 | 39 | 41 | DBP | 8,5 | 1,4658 | 29,8 | 22,6 | 550 | 15 | 51 | 34 |
| r | 12 | 570 | 40 | 51 | DBP | 1,5 | 1,4674 | 32,9 | 22,2 | 1500 | 9 | 74 | 17 |
| s | 12 | 570 | 39 | 41 | DBP | 4 | 1,4659 | 30,7 | 22,5 | 458 | 19 | 42 | 39 |
| t | 12 | 590 | 20 | 30 | DBP | 3 | 1,4665 | 29,7 | 22,6 | 1190 | 12 | 74 | 14 |

(fortgesetzt)

| Bsp. 1... | Angaben zum Katalysator | | Angaben zur Reaktionsführung | | | | | Harzdaten | | | | | |
|---|---|---|---|---|---|---|---|---|---|---|---|---|---|
| | Nr. (vgl. Tab. 1 | Menge bezogen auf HDI [ppm] | T [°C] | | Abstop-per[1)] | Reaktionszeit bis Stopper-zugabe [h] | $n_D^{20}$ bei Stopper-zugabe | Ausb.[2)] [%] | NCO-Gehalt [%] | Viskosität bei 23°C [mPa·s] | Iminooxa-diazindione [mol-%][3)] | Iso-cyanurate [mol-%][3)] | Uret-dione [mol-%][3)] |
| | | | min | max | | | | | | | | | |
| u | 12 | 550 | 59 | 60 | DBP | 7 | 1,4658 | 27,1 | 21,4 | 370 | 23 | 28 | 49 |
| v | 13 | 500 | 26 | 62 | DBP | 4,5 | 1,4664 | 31,9 | 22,7 | 520 | 11 | 44 | 45 |

1) DBP = Dibutylphosphat, TOS = p-Toluolsulfonsäure
2) Harzausbeute = Harzmenge geteilt durch (Summe aus Destillatmonomer und Harz)
3) $^{13}$C-NMR-spektroskopisch ermittelt, Summe der drei Strukturtypen auf 100% normiert

**Beispiel 3** Herstellung von $H_6$XDI-Polyisocyanaten (erfindungsgemäß)

100 g (0,51 mol) 1,3-Bis(isocyanatomethyl)cyclohexan ($H_6$-,XDI, Fa. Aldrich) werden zunächst wie in Beispiel 1 beschrieben vorbehandelt und anschließend bei 90°C Innentemperatur durch Zugabe von 0,045 mmol Natriumbenztriazolat (Katalysatorlösung 9) oligomerisiert. Im Verlauf der Reaktion werden bis kurz vor Erreichen des Gelpunktes 6 Proben entnommen (ä 1-2 g), die mit einem ca. 100%igen Überschuß an Di-n-butylphosphat abgestoppt werden. Der Gehalt an nicht umgesetztem Monomer wird gaschromatografisch bestimmt (erste Probe:71,2% sukzessive abfallend bis zur sechsten Probe: 43,3 %). Die molare Verhältnis der gebildeten Strukturtypen wird mittels $^{13}C$-NMR-Spektroskopie in ca. 80 %iger Lösung in $CDCl_3$. analysiert. Es ändert sich über den genannten Umsatzbereich praktisch nicht. Uretonimine sind nicht nachweisbar.

**Beispiel 4** Herstellung von TMDI-Polyisocyanaten (erfindungsgemäß)

100 g (0,48 mol) 1,6-Diisocyanato-2,2(4),4-trimethylhexan (TMDI, Fa. Aldrich) werden in völliger Analogie zu Beispiel 3 oligomerisiert und analysiert (5 Proben, Umsatzbereich zwischen 71,2 % Monomer sukzessive abfallend bis zur fünften Probe auf 35,1 %). Die molare Verhältnis der gebildeten Strukturtypen wird mittels $^{13}C$-NMR-Spektroskopie in ca. 80%iger Lösung in $CDCl_3$. analysiert. Es ändert sich über den genannten Umsatzbereich praktisch nicht. Uretonimine sind nicht nachweisbar.

**Beispiel 5** Verwendungsbeispiel

10 g eines Polyisocyanates erhalten nach Beispiel 1h, werden zunächst mit 50 mg einer 10 %igen Lösung von Dibutylzinndilaurat in Butylacetat versetzt und anschließend mit 24,7 g eines Hydroxylgruppen enthaltenden Acrylates hergestellt aus 40 % Styrol, 34 % Hydroxyethylmethacrylat, 25 % Butylacrylat und 1 % Acrylsäure mit einem OH-Gehalt nach DIN 53 240 von 3 %, einer Säurezahl nach DIN 53402 von 8 und einer Viskosität 3500 mPas bei 23°C (als 70%ige Lösung in Butylacetat) - vermischt (NCO:OH-Verhältnis = 1,1:1), in einer 120 $\mu$m dicken Schicht auf eine Glasplatte aufgetragen und einer forcierten Trocknung für 30 Minuten bei 60°C unterworfen. Man erhält einen klaren, hochglänzenden Lackfilm, der nach 100 Doppelhüben mit MEK keine Schädigung aufweist und mit einem Bleistift der Härte HB nicht anritzbar ist.

**Vergleichsbeispiele, nicht erfindungsgemäß**

**Vergleichsbeispiel 1**

Phosphinkatalyse (vgl. DE-A 16 70 720)

**1a) bis 1c)**

Jeweils 200 g (1,19 mol) frisch destilliertes HDI werden bei 60°C zunächst im Vakuum (0,1 mbar) zur Entfernung gelöster Gase 1h gerührt, anschließend mit trockenem Stickstoff belüftet und bei a) 60°C, b) 120°C bzw. c) 180°C mit jeweils 3 g (14,8 mmol) Tri-n-butylphosphin (Cytop® 340, Fa. Cytec) versetzt und bis zum Erreichen des in Tab. 4 angegebenen Brechungsindex' der Rohlösung unter einer Stickstoffatmosphäre umgesetzt. Anschließend wird durch Zugabe von jeweils 4 g (26 mmol) p-Toluolsulfonsäuremethylester die Weiterreaktion unterbunden ('abgestoppt'), wozu jeweils ca. eine Stunde bei 80°C nachgerührt wird, bis sich der Brechungsindex der Mischung nicht mehr ändert. Die Rohprodukte werden anschließend durch Dünnschichtdestillation bei 120°C/0,1 mbar in einem Kurzwegverdampfer vom nicht umgesetzten Monomer befreit. Anschließend wird die Produktzusammensetzung mittels $^{13}C$-NMR hinsichtlich der gebildeten Strukturtypen bestimmt. Die Messung des Restmonomergehaltes erfolgt gaschromatographisch. Letzterer wird nach 3-wöchiger Lagerung bei Zimmertemperatur (20 bis 25°C) und anschließender 2-wöchiger Lagerung bei 50°C im Trockenschrank nochmals bestimmt. Ausgewählte Analysen- und Berechnungsergebnisse sind in Tabelle 4 zusammengestellt.

**1d)**

Die Reaktion wird wie unter 1a) angegeben geführt, mit der Ausnahme, dass bei den in Tabelle 4 angegebenen Werten des Brechungsindex' der Rohware jeweils ein Aliquot der Reaktionsmischung entnommen, wie oben beschrieben mit dem entsprechenden Aliquot p-Toluolsulfonsäuremethylester "abgestoppt" wird und diese Teilmengen mit unterschiedlichem Umsatz separat analysiert werden (Beispiele 1d-1 bis 1d-7 in Tab. 4). Die verbleibende Hauptmenge des Reaktionsansatzes wird nach Erreichen eines Brechungsindex von 1,4913 wie oben beschrieben abgestoppt, aufgearbeitet und analysiert (1d-8). Ausgewählte Analysen- und Berechnungsergebnisse sind in Tabelle 4 zusammengestellt.

Wie man sofort erkennt, ist die Produktzusammensetzung bei der Phosphinkatalyse stark vom Umsatz und von der Reaktionstemperatur abhängig. Besonders nachteilig ist die Bildung von Uretoniminen bei höherer Reaktionstemperatur.

**<u>Vergleichsbeispiel 2</u>**

Katalyse mit N-Silylverbindungen (vgl. EP-A 57 653)

Jeweils 200 g (1,19 mol) frisch destilliertes HDI werden bei 60°C zunächst im Vakuum (0,1 mbar) zur Entfernung gelöster Gase 1 h gerührt, anschließend mit trockenem Stickstoff belüftet und bei der in Tab. 5 angegebenen Temperatur mit der in Tab. 5 angegebenen Menge an Hexamethyldisilazan (HMDS) für die in Tab. 5 angegebene Zeit gerührt bis der in Tab. 5 angegebene Brechungsindex der Rohlösung erreicht ist. Anschließend wird mit der zur eingesetzten HMDS-Mengen stöchiometrischen Menge an Desaktivator ("Stopper", vgl. Tab. 5) versetzt, eine weitere Stunde bei der angegebenen Temperatur gerührt, dünnschichtdestillativ aufgearbeitet und analysiert wie weiter oben beschrieben.

Wie man sofort erkennt, ist das Verhältnis von Uretdion- zu Isocyanuratstrukturen sehr stark umsatzabhängig und selbst bei sehr ähnlichen experimentellen Bedingungen, zumindest im Laborversuch, schlecht reproduzierbar. Iminooxadiazindione sind in den Harzen NMR-spektroskopisch gerade nachweisbar (unter 1 mol-%).

**Tabelle 4** Resultate der Tributylphosphin-katalysierten HDI-Oligomerisierung (nicht erfindungsgemäß)

| Vgl. bsp. 1... | $n_D^{20}$ (Stopp) | Harz- ausbeute | NCO-Gehalt | viskosität | HDI-Gehalt | Uretonimine | Uretdione | Isocyanurate | Iminooxadiazin-dione |
|---|---|---|---|---|---|---|---|---|---|
| | | [%] | [%] | [mPas]$^{23°C}$ | [%] | [mol-%][1] | [mol-%][1] | [mol-%][1] | [mol-%][1] |
| a | 1,4732 | 46,3[7] | 20,2 | 240 | 0,1/0,1/0,2[2] | n.n.[3] | 69 | 22 | 9 |
| b | 1,4731 | 40,0[7] | 20,6 | 1250 | 0,3/0,3/0,4[2] | 3 | 28 | 47 | 22 |
| c | 1,4768 | 39,4[7] | 19,5 | 5200[4] | 2,7/3,8/5,4[2] | 54 | 4 | 30 | 12 |
| d-1 | 1,4542 | 6,5[6] | n.b.[5] | | | n.n.[3] | 91 | 6 | 4 |
| d-2 | 1,4604 | 24,7[6] | n.b.[5] | | | n.n.[3] | 88 | 9 | 3 |
| d-3 | 1,4663 | 40,6[6] | n.b.[5] | | | n.n.[3] | 85 | 11 | 4 |
| d-4 | 1,4717 | 55,9[6] | n.b.[5] | | | n.n.[3] | 81 | 13 | 5 |
| d-5 | 1,4755 | 57,2[6] | n.b.[5] | | | n.n.[3] | 79 | 15 | 6 |
| d-6 | 1,4807 | 63,7[6] | n.b.[5] | | | n.n.[3] | 76 | 18 | 7 |
| d-7 | 1,4860 | 68,1[6] | n.b.[5] | | | n.n.[3] | 72 | 20 | 8 |
| d-8 | 1,4913 | 75,1[7] | 16,9 | 6500 | 0,05/0,1/0,2[2] | n.n.[3] | 68 | 23 | 9 |

1) $^{13}C$-NMR spektroskopisch bestimmt; Summe der Uretonimin, Uretdion-, Isocyanurat- und Iminooxadiazindionstrukturen auf 100 % normiert
2) Restmonomergehalt nach: Aufarbeitung/-3-wöchiger Lagerung bei Zimmertemperatur/-weiterer 2-wöchiger Lagerung bei 50 °C
3) n.n. = nicht nachweisbar
4) heterogenes, trübes Produkt
5) n.b. = nicht bestimmt
6) Harzausbeute = 100 - HDI-Gehalt, letzterer wird gaschromatographisch bestimmt
7) Harzausbeute = Harzmenge geteilt durch (Summe aus Destillatmonomer und Harz)

**Tabelle 5** Resultate der HMDS-katalysierten HDI-Oligomerisierung (nicht erfindungsgemäß)

| Vglbsp. 2... | HMDS [% bez. a. HDI] | Reaktions- -temp. [°C] | Reaktions- -zeit [h] | $n_D^{20}$ bei Stop | Stopper äquimolar zum HMDS | Harz.... -viskosität [mPas]@23°C | Harz.... -ausbeute[1)] [%] | Harz.... -NCO-Gehalt [%] | $^{13}$C-NMR [mol-% der NCO- Folgeprodukte][2)] Uretdione | $^{13}$C-NMR [mol-% der NCO- Folgeprodukte][2)] Isocyanurate |
|---|---|---|---|---|---|---|---|---|---|---|
| a | 0,4 | 112-125 | 5 | 1,4620 | $H_2O$ | 760 | 21,5 | 23,6 | 21 | 79 |
| b | 0,4 | 112-124 | 5 | 1,4632 | $H_2O$ | 1120 | 24,0 | 23,4 | 12 | 88 |
| c | 0,4 | 110-122 | 5 | 1,4623 | $H_2O$ | 1010 | 20,3 | 23,5 | 11 | 89 |
| d | 0,4 | 115-123 | 4,5 | 1,4600 | $H_2O$ | 722 | 18,3 | 23,5 | 16 | 84 |
| e | 0,4 | 114-127 | 4 | 1,4633 | $H_2O$ | 1210 | 25,6 | 23,1 | 11 | 89 |
| f | 0,8 | 114-128 | 3,5 | 1,4670 | $H_2O$ | 1620 | 31,5 | 22,2 | 12 | 88 |
| g | 1 | 114-130 | 4 | 1,4715 | $H_2O$ | 2750 | 39,0 | 21,9 | 10 | 90 |
| h | 1,2 | ca.120 | 6 | 1,4666 | BuOH | 2110 | 31,6 | 22,1 | 7 | 93 |
| i | 1,2 | 117-125 | 2 | 1,4637 | BuOH | 1610 | 25,6 | 23,3 | 5 | 95 |
| j | 1,2 | ca.120 | 1,5 | 1,4617 | BuOH | 1370 | 22,5 | 23,7 | 6 | 94 |
| k | 1,2 | ca. 120 | 3,25 | 1,4658 | BuOH | 2380 | 31 | 22,7 | 3 | 97 |
| l | 1,2 | 118-122 | 5 | 1,4714 | BuOH | 3500 | 39,8 | 22 | 4 | 96 |
| m | 1,2 | ca. 120 | 7,5 | 1,4742 | BuOH | 5290 | 44,2 | 21,8 | 4 | 96 |
| n | 2 | ca. 120 | 7 | 1,4836 | BuOH | 34100 | 64,5 | 18,8 | 3 | 97 |
| o | 2,5 | ca.120 | 7 | 1,4926 | BuOH | 180000 | 77,8 | 17,8 | 2 | 98 |

1) Harzausbeute = Harzmenge geteilt durch (Summe aus Destillatmonomer und Harz)

2) Summe der beiden Strukturtypen auf 100% normiert

## Patentansprüche

**1.** Verfahren zur Herstellung von Polyisocyanaten durch katalysierte Umsetzung aliphatischer Düsocyanate, **dadurch gekennzeichnet, dass** als Katalysatoren salzartige Verbindungen eingesetzt werden, die im Anion 5 bis 97,1 Gew.-% an 1,2,3- und/oder 1,2,4-Triazolatstrukturen (berechnet als $C_2N_3$, Molekulargewicht = 66) enthalten.

**2.** Verfahren gemäß Anspruch 1, **dadurch gekennzeichnet, dass** als Katalysatoren salzartige Verbindungen eingesetzt werden, die im Anion Triazolatstrukturen der allgemeinen Formeln (**I**) und/oder (**II**)

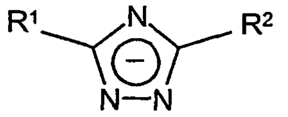

(I)

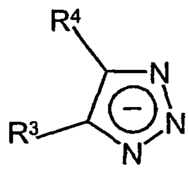

(II)

enthalten, in welchen

$R^1$, $R^2$, $R^3$ und $R^4$ für gleiche oder verschiedene Reste stehen und jeweils ein Wasserstoffatom, ein Halogenatom aus der Reihe Fluor, Chlor oder Brom oder eine Nitrogruppe, einen gesättigten oder ungesättigten aliphatischen oder cycloaliphatischen, einen gegebenenfalls substituierten aromatischen oder araliphatischen Rest, der bis zu 20 Kohlenstoffatome und gegebenenfalls bis zu 3 Heteroatome aus der Reihe Sauerstoff, Schwefel, Stickstoff enthalten und gegebenenfalls durch Halogenatome oder Nitrogruppen substituiert sein kann, bedeuten
und wobei
$R^3$ und $R^4$ auch in Kombination untereinander zusammen mit den Kohlen-stoffatomen des 1,2,3-Triazolatfünfriges und gegebenenfalls einem weiteren Stickstoffatom oder einem Sauerstoffatom anellierte Ringe mit 3 bis 6 Kohlenstoffatomen bilden können.

**3.** Verfahren gemäß Ansprüchen 1 und 2, **dadurch gekennzeichnet, dass** als Katalysatoren salzartige Verbindungen eingesetzt werden, die im Anion Triazolatstrukturen der allgemeinen Formel (**I**) enthalten, in welcher

$R^1$ und $R^2$ für gleiche oder verschiedenen Reste stehen und jeweils ein Wasserstoffatom, ein Halogenatom aus der Reihe Fluor, Chlor oder Brom oder eine Nitrogruppe, einen gesättigten aliphatischen oder cycloaliphatischen, einen gegebenenfalls substituierten aromatischen oder araliphatischen Rest, der bis zu 12 Kohlenstoffatome und gegebenenfalls bis zu 3 Heteroatome aus der Reihe Sauerstoff, Schwefel, Stickstoff enthalten und gegebenenfalls durch Halogenatome oder Nitrogruppen substituiert sein kann, bedeuten.

**4.** Verfahren gemäß Ansprüchen 1 und 2, **dadurch gekennzeichnet, dass** als Katalysatoren salzartige Verbindungen eingesetzt werden, die im Anion Triazolatstrukturen der allgemeinen Formel (**II**) enthalten, in welcher

$R^3$ und $R^4$ für gleiche oder verschiedenen Reste stehen und jeweils ein Wasserstoffatom, ein Halogenatom aus der Reihe Fluor, Chlor oder Brom oder eine Nitrogruppe, einen gesättigten oder ungesättigten aliphatischen oder cycloaliphatischen, einen gegebenenfalls substituierten aromatischen oder araliphatischen Rest, der bis zu 12 Kohlenstoff-atome und gegebenenfalls bis zu 3 Heteroatome aus der Reihe Sauerstoff, Schwefel, Stickstoff enthalten und gegebenenfalls durch Halogenatome oder Nitrogruppen substituiert sein kann, bedeuten, und auch in Kombination untereinander zusammen mit den Kohlenstoff-atomen des 1,2,3-Triazolatfünfriges und gegebenenfalls einem weiteren Stickstoffatom oder einem Sauerstoffatom anellierte Ringe mit 3 bis 6 Kohlenstoffatomen bilden können.

**5.** Verfahren gemäß Ansprüchen 1 bis 4, **dadurch gekennzeichnet, dass** als Katalysatoren Salze des 1,2,4-Triazols, des 1,2,3-Triazols, des 1,2,3-Benztriazols und/oder des Pyridinotriazols eingesetzt werden.

**6.** Verfahren gemäß Ansprüchen 1 bis 5, **dadurch gekennzeichnet, daß** man Oligomerisierunskatalysatoren einsetzt, die als Kation Alkali-, Erdalkali-und/oder einwertige Ammonium- und/oder Phosphonium-kationen der allgemeinen

Formel (**III**)

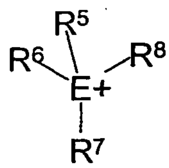

**(III)**

enthalten, in welcher

E für Stickstoff oder Phosphor steht und
$R^5$, $R^6$, $R^7$ und $R^8$ für gleiche oder verschiedene Reste stehen, und jeweils einen gesättigten aliphatischen oder cycloaliphatischen, einen gegebenenfalls substituierten aromatischen oder araliphatischen Rest mit bis zu 18 Kohlenstoffatomen bedeuten.

**7.** Die nach dem Verfahren gemäß Anspruch 1 erhaltenen Polyisocyanate.

**8.** Polyisocyanate gemäß Anspruch 7, **dadurch gekennzeichnet, dass** sie aus aliphatischen Diisocyanaten hergestellt werden, die im Kohlenstoffgerüst außer den NCO-Gruppen 4 bis 20 Kohlenstoffatome aufweisen, wobei die NCO-Gruppen an primär-aliphatische Kohlenstoffatome gebunden sind.

**9.** Polyisocyanate gemäß Anspruch 7, **dadurch gekennzeichnet, dass** sie aus den aliphatischen Diisocyanaten Hexamethylendiisocyanat (HDI), Triethyl-HDI (TMDI), 2-Methylpentan-1,5-diisocyanat (MPDI), 1,3- sowie 1,4-Bis (isocyanatomethyl)cyclohexan ($H_6XDI$) und/oder Bis(isocyanatomethyl)norbornan (NBDI) hergestellt werden.

**10.** Die Verwendung der Polyisocyanate gemäß Ansprüchen 7 bis 9 zur Herstellung von Polyurethan-Kunststoffen und -Beschichtungen.

## Claims

**1.** Process for preparing polyisocyanates by catalyzed reaction of aliphatic diisocyanates, **characterized in that** as catalysts saltlike compounds are used containing in the anion from 5 to 97.1% by weight of 1,2,3- and/or 1,2,4-triazolate structures (calculated at $C_2N_3$, molecular weight = 66).

**2.** Process according to Claim 1, **characterized in that** as catalysts saltlike compounds are used containing in the anion triazolate structures of the general formulae (**I**) and/or (**II**)

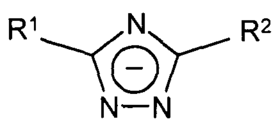

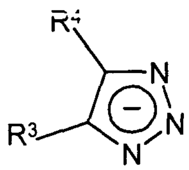

**(I)** **(II)**

in which

$R^1$, $R^2$, $R^3$, and $R^4$ represent identical or different radicals and in each case denote a hydrogen atom, a halogen atom from the fluorine, chlorine or bromine series or a nitro group, a saturated or unsaturated aliphatic or

cycloaliphatic radical or an optionally substituted aromatic or araliphatic radical which can contain up to 20 carbon atoms and optionally up to 3 heteroatoms from the oxygen, sulfur, nitrogen series and can optionally be substituted by halogen atoms or nitro groups,
and where
$R^3$ and $R^4$ can also form, in combination with one another together with the carbon atoms of the five-membered 1,2,3-triazolate ring and optionally a further nitrogen atom or an oxygen atom, fused rings having from 3 to 6 carbon atoms.

**3.** Process according to Claims 1 and 2, **characterized in that** as catalysts saltlike compounds are used containing in the anion triazolate structures of the general formula (**I**) in which

$R^1$ and $R^2$ represent identical or different radicals and in each case denote a hydrogen atom, a halogen atom from the fluorine, chlorine or bromine series or a nitro group, a saturated aliphatic or cycloaliphatic radical or an optionally substituted aromatic or araliphatic radical which can contain up to 12 carbon atoms and optionally up to 3 heteroatoms from the oxygen, sulfur, nitrogen series and can optionally be substituted by halogen atoms or nitro groups.

**4.** Process according to Claims 1 and 2, **characterized in that** as catalysts saltlike compounds are used containing in the anion triazolate structures of the general formula (**II**) in which

$R^3$ and $R^4$ represent identical or different radicals and in each case denote a hydrogen atom, a halogen atom from the fluorine, chlorine or bromine series or a nitro group, a saturated or unsaturated aliphatic or cycloaliphatic radical or an optionally substituted aromatic or araliphatic radical which can contain up to 12 carbon atoms and optionally up to 3 heteroatoms from the oxygen, sulfur, nitrogen series and can optionally be substituted by halogen atoms or nitro groups, and also can form in combination with one another together with the carbon atoms of the five-membered 1,2,3-triazolate ring and optionally a further nitrogen atom or an oxygen atom, fused rings having from 3 to 6 carbon atoms.

**5.** Process according to Claims 1 to 4, **characterized in that** as catalysts salts of 1,2,4-triazole, of 1,2,3-triazole, of 1,2,3-benzotriazole and/or of pyridinotriazole are used.

**6.** Process according to Claims 1 to 5, **characterized in that** oligomerization catalysts are used containing as cation alkali metal, alkaline earth metal and/or monovalent ammonium and/or phosphonium cations of the general formula (**III**)

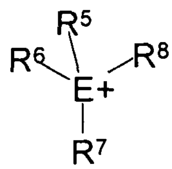

(III)

in which

E represents nitrogen or phosphorus and
$R^5$, $R^6$, $R^7$, and $R^8$ represent identical or different radicals and each denote a saturated aliphatic or cycloaliphatic radical or an optionally substituted aromatic or araliphatic radical having up to 18 carbon atoms.

**7.** The polyisocyanates obtained by the process according to Claim 1.

**8.** Polyisocyanates according to Claim 7, **characterized in that** they are prepared from aliphatic diisocyanates containing in the carbon framework in addition to the NCO groups from 4 to 20 carbon atoms, the NCO groups being attached to primary aliphatic carbon atoms.

9. Polyisocyanates according to Claim 7, **characterized in that** they are prepared from the aliphatic diisocyanates hexamethylene diisocyanate (HDI), trimethyl-HDI (TMDI), 2-methylpentane 1,5-diisocyanate (MPDI), 1,3- and also 1,4-bis(isocyanatomethyl)cyclohexane ($H_6XDI$) and/or bis(isocyanatomethyl)norbornane (NBDI).

10. The use of the polyisocyanates according to Claims 7 to 9 for producing polyurethane polymers and polyurethane coatings.

**Revendications**

1. Procédé pour la préparation de polyisocyanates par réaction catalysée de diisocyanates aliphatiques, **caractérisé en ce que** l'on utilise comme catalyseurs des composés de type sel, lesquels contiennent dans l'anion de 5 à 97,1 % en poids de structures 1,2,3- et/ou 1,2,4-triazolate (calculé comme $C_2N_3$, poids moléculaire = 66).

2. Procédé selon la revendication 1, **caractérisé en ce que** l'on utilise comme catalyseurs des composés de type sel, lesquels contiennent dans l'anion des structures triazolate, des formules générales (I) et/ou (II)

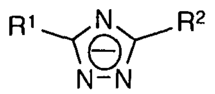

(I)

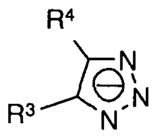

(II)

dans lesquelles,
$R^1$, $R^2$, $R^3$ et $R^4$ représentent des restes identiques ou différents et représentent à chaque fois un atome d'hydrogène, un atome d'halogène de la série du fluor, du chlore ou du brome ou un groupe nitro, un reste aliphatique ou cycloaliphatique saturé ou insaturé, un reste aromatique ou araliphatique éventuellement substitué, lequel peut contenir jusqu'à 20 atomes de carbone et éventuellement jusqu'à 3 hétéroatomes de la série de l'oxygène, du soufre, de l'azote et peut éventuellement être substitué par des atomes d'halogène ou des groupes nitro
et dans lequel
$R^3$ et $R^4$ peuvent également former en combinaison l'un avec l'autre avec les atomes de carbone du noyau pentagonal de 1,2,3-triazolate et éventuellement avec un autre atome d'azote ou un atome d'oxygène des noyaux condensés avec de 3 à 6 atomes de carbone.

3. Procédé selon les revendications 1 et 2, **caractérisé en ce que** l'on utilise comme catalyseurs des composés de type sel, qui contiennent dans l'anion des structures triazolate de la formule générale (I), dans laquelle
$R^1$ et $R^2$ représentent des restes identiques ou différents et représentent à chaque fois un atome d'hydrogène, un atome d'halogène de la série du fluor, du chlore ou du brome ou un groupe nitro, un reste aliphatique ou cycloaliphatique saturé, un reste aromatique ou araliphatique éventuellement substitué, lequel contient jusqu'à 12 atomes de carbone et éventuellement jusqu'à 3 hétéroatomes de la série de l'oxygène, du soufre, de l'azote et peut éventuellement être substitué par des atomes d'halogène ou des groupes nitro.

4. Procédé selon la revendication 1 et 2, **caractérisé en ce que** l'on utilise comme catalyseurs des composés de type sel, lesquels contiennent dans l'anion des structures triazolate de la formule générale (II), dans laquelle
$R^3$ et $R^4$ représentent des restes identiques ou différents et représentent à chaque fois un atome d'hydrogène, un atome d'halogène de la série du fluor, du chlore ou du brome ou un groupe nitro, un reste aliphatique ou cycloaliphatique saturé ou insaturé, un reste aromatique ou araliphatique éventuellement substitué, lequel peut contenir jusqu'à 12 atomes de carbone et éventuellement jusqu'à 3 hétéroatomes de la série de l'oxygène, du soufre, de l'azote et peut éventuellement être substitué par des atomes d'halogène ou des groupes nitro, et peuvent également former en combinaison l'un avec l'autre avec les atomes de carbone du noyau pentagonal de 1,2,3-triazolate et éventuellement avec un autre atome d'azote et un atome d'oxygène des noyaux condensés avec de 3 à 6 atomes de carbone.

5. Procédé selon les revendications 1 à 4, **caractérisé en ce que** l'on utilise comme catalyseurs des sels du 1,2,4-triazole, du 1,2,3-triazole, du 1,2,3-benzotriazole et/ou du pyridinotriazole.

6. Procédé selon les revendications 1 à 5, **caractérisé en ce que** l'on utilise comme catalyseurs d'oligomérisation, ceux qui contiennent comme cations des cations d'alcalis, d'éléments alcalino-terreux et/ou d'ammonium et/ou de phosphonium monovalents de la formule générale (III)

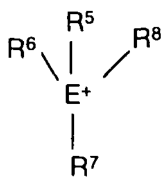

(III)

dans laquelle
E représente l'azote ou le phosphore et
$R^5$, $R^6$, $R^7$ et $R^8$ représentent des restes identiques ou différents et représentent à chaque fois un reste aliphatique ou cycloaliphatique saturé, un reste aromatique ou araliphatique éventuellement substitué avec jusqu'à 18 atomes de carbone.

7. Polyisocyanates obtenus selon le procédé selon la revendication 1.

8. Polyisocyanates selon la revendication 7, **caractérisés en ce qu'**ils sont préparés à partir de diisocyanates aliphatiques, lesquels présentent dans le squelette carboné en plus des groupes NCO de 4 à 20 atomes de carbone, les groupes NCO étant liés à des atomes de carbone primaires-aliphatiques.

9. Polyisocyanates selon la revendication 7, **caractérisés en ce qu'**ils sont préparés à partir des diisocyanates aliphatiques du diisocyanate d'hexaméthylène (HDI), du triméthyl-HDI (TMDI), du 1,5-diisocyanate de 2-méthylpentane (MPDI), du 1,3- ainsi que du 1,4-bis(isocyanatométhyl)-cyciohexane ($H_6XDI$) et/ou du bis(isocyanatométhyl)norbomane (NBDI).

10. Utilisation des polyisocyanates selon les revendications 7 à 9 pour la préparation de matières plastiques et de revêtements de polyuréthanne.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 1670720 A
- EP 0010589 A
- EP 0798299 A
- EP 798299 A
- EP 57653 A
- EP 89297 A
- EP 187105 A
- EP 197864 A
- WO 9907765 A
- EP 0741157 A
- DE 19828935 A
- WO 9967226 A
- DE 4302461 A


### In der Beschreibung aufgeführte Nicht-Patentliteratur


- *J. Prakt. Chem./Chem. Ztg.,* 1994, vol. 336, 185-200
- Proc. of the XXIV. Fatipec Conference. 08. Juni 1998, vol. D, D-136-137
- *Die Angewandte Makromolekulare Chemie,* 1986, vol. 141, 173-183
- *Ber. d. dtsch. Chem. Ges.,* 1927, vol. 60, 295